# EUROPEAN PATENT SPECIFICATION

(11) **EP 3 572 738 B1**
(45) Date of publication and mention of the grant of the patent: **23.06.2021**
(21) Application number: 19174893.8
(22) Date of filing: 16.05.2019
(51) Int. Cl.: F24F 12/00, F24D 11/02, F24D 17/00, F24D 17/02, F24D 5/02, F24D 5/12

(54) **AN AIR HANDLING ASSEMBLY AND A METHOD OF UPGRADING AN AIR HANDLING ASSEMBLY**
LÜFTUNGSANORDNUNG UND VERFAHREN ZUR NACHRÜSTUNG EINER LÜFTUNGSANORDNUNG
ENSEMBLE DE TRAITEMENT DE L'AIR ET PROCÉDÉ DE MISE À NIVEAU D'UN ENSEMBLE DE TRAITEMENT DE L'AIR

(30) Priority: 23.05.2018 FI 20185475
(43) Date of publication of application: 27.11.2019
(73) Proprietor: AT-Air Oy, 48100 Kotka (FI)
(72) Inventor: Mannersuo, Rainer, 48100 Kotka (FI)
(74) Representative: Genip Oy

(56) References cited:
- EP-A1- 1 731 846
- EP-A1- 3 165 838
- WO-A1-2004/094921
- US-A1- 2006 201 183

## Description

The invention relates to an air handling assembly according to the preamble of claim 1, comprising a first air duct for exhaust air to be cooled comprising an air inlet opening and an air outlet opening, a second air duct for supply air to be heated comprising an air inlet opening and an air outlet opening, as well as a heat recovery system fitted in connection with the first and second air ducts, in the area between their inlet openings and outlet openings, arranged to transfer heat between the air flow to be heated and the air flow to be cooled flowing in the air ducts, as well as a heat pump assembly.

The invention further relates to a method for upgrading an air handling assembly.

From prior art is known an air exchange assembly comprising an exhaust air duct and a supply air duct, in which heat from the exhaust air flowing in the exhaust air duct is transferred by a heat exchanger into the supply air flowing in the supply air duct. In cold conditions, such an assembly has a risk of the exhaust air humidity condensing and freezing in the heat exchanger, or generally in the air exchange assembly. The risk of freezing increases as the outside temperature falls and the efficiency of the air exchange assembly improves. The efficiency of the air exchange unit is known to be improved by fitting to the air exchange assembly a so-called exhaust air heat pump, in which heat from the exhaust air is transferred into the supply air. In this case, the risk of freezing may be further increased.

From EP 2783165 B1 is known an air exchange assembly for controlling the indoor air of a building. The system comprises a first air duct for guiding air from an outdoor space into the assembly for handling air and, further, for guiding the handled air into the indoor air space of the building. The first air duct is equipped with a blower. The system also comprises a second air duct for guiding exhaust air from the indoor space into the assembly for handling the exhaust air and, further, for guiding the handled waste air into the outdoor space of the building. The second air duct is equipped with a blower. The system comprises a regenerative exhaust air-supply air heat exchanger, which is arranged in connection with the first and second air ducts for transferring heat between the exhaust air and the supply air. The system also has water-air heat exchangers in both the first air duct and the second air duct, which are optionally connected to the cold water or hot water circuits of the system. The water-air heat exchanger in the second, i.e. the exhaust air duct is placed, in the direction of air flow, downstream of the exhaust air-supply air heat exchanger. The system further has a heat pump arranged to transfer heat between the cold water and hot water circuits. According to the publication, in order to prevent the equipment from freezing, the regenerative exhaust air-supply air heat exchanger is set to rotate at a slower speed than normal, wherein heat does not transfer from the exhaust air into the supply air in the normal manner and cooling of the exhaust air is prevented.

Document EP 3165838 A1 discloses a device for ventilating rooms which device comprises a supply air duct and an exhaust air duct which are arranged to have an air-to-air heat exchanger for transferring heat between the air flows. The device is provided with a heat pump the evaporator of which is arranged to the exhaust air duct downstream the air-to-air heat exchanger and condensers to the supply air duct upstream and downstream the air-to-air heat exchanger. This document discloses an air handling assembly according to the preamble of claim 1, and discloses a method of upgrading an air handling assembly according to the preamble of claim 6.

WO2017217904 A1 discloses an air conditioning assembly utilizing a heat pump. Herein is presented the inverse use of a heat pump system to prevent the heat recovery from freezing.

A disadvantage of the solutions presented above is i.a. that preventing the heat recovery system from freezing causes a decrease in the efficiency of heat recovery.

An object of the invention is to elevate the state of prior known art predominating in the field by presenting such an air handling assembly, with which the disadvantages of known art are minimized.

Objects of the invention are achieved primarily in the manner presented in the independent claim, as well as in more detail in the other claims. Additional features characterizing the invention will appear from the accompanying claims and the following description of the embodiments of the figures.

The advantages of the invention are i.a. freezing prevention of the heat recovery system is more advantageous and more efficient than in the past, as well as the general efficiency of the apparatus and the method.

An air handling assembly according to the invention comprises a first air duct for exhaust air to be cooled comprising an air inlet opening and an air outlet opening, a second air duct for supply air to be heated comprising an air inlet opening and an air outlet opening, as well as a heat recovery system fitted in connection with the first and second air ducts, in the area between their inlet openings and outlet openings, arranged to transfer heat between the air to be heated and the air to be cooled flowing in the air ducts, as well as a heat pump assembly. The heat pump assembly comprises a first heat exchanger unit arranged to cool the air flowing in the first air duct for exhaust air and fitted in connection with the first air duct at a location downstream of the heat recovery system, in the direction of air flow, and the heat pump comprises a second heat exchanger unit arranged to heat the air flowing in the first air duct for exhaust air and fitted in connection with the first air duct at a location upstream of the heat recovery system, in the direction of air flow.

According to an embodiment of the invention the heat pump assembly comprises a heat pump, and the first heat exchanger unit is a heat pump evaporator, and the heat pump assembly comprises a heat accumulator arranged to be heated by the heat pump, and the heat accumulator is connected to a heat transfer connection with the second heat exchanger unit.

According to an embodiment of the invention the heat pump assembly comprises a heat pump, and the first heat exchanger unit of the heat pump assembly is the heat pump evaporator and the second heat exchanger unit is the heat pump assembly condenser.

According to an embodiment of the invention the heat pump assembly comprises a third heat exchanger unit, which is connected to a heat transfer connection with the heat accumulator.

According to an embodiment of the invention the second heat exchanger unit and the third heat exchanger unit are connected by the duct system to the hot water accumulator such that they are connected in parallel in relation to each other.

According to the invention, in a method for upgrading an existing air handling assembly, the existing air handling assembly comprising a first air duct for exhaust
air to be cooled comprising an air inlet opening and an air outlet opening, a second air duct for supply
air to be heated comprising an air inlet opening and an air outlet opening, as well as a heat recovery system fitted in connection with the first and second air ducts, in the area between their inlet openings and outlet openings, arranged to transfer heat between the air to be heated and the air to be cooled flowing in the air ducts, and, further, the existing air handling assembly comprising in connection with the second air duct a post-heating device, in the method, into the existing air handling assembly is installed a heat pump assembly such that into the first air duct for exhaust air of the air handling assembly is installed a heat pump assembly evaporator, at a location in the direction of air flow downstream of the heat recovery system, and, further, such that into the first air duct for exhaust air of the air handling assembly is installed a heat pump assembly condenser, at a location in the direction of air flow upstream of the heat recovery system.

According to an embodiment of the invention, in the upgrading, a temperature transmitter or thermometer is installed in connection with the second air duct, in the direction of air flow, upstream of the post-heating device, to measure the temperature of the air flowing in the air duct, and the heat pump assembly is configured to maintain the temperature of the air flowing in the second air duct upstream of the post-heating device in the pre-defined range.

In the following, the invention and its operation is described by means of reference to the accompanying schematic drawings, in which
- Fig. 1: shows schematically an embodiment of an air handling assembly according to the invention,
- Fig. 2: shows schematically an embodiment of an air handling assembly according to the invention,
- Fig. 3: shows schematically an embodiment of an air handling assembly according to the invention,
- Fig. 4: shows a flow chart, which illustrates a method for controlling the temperature of a heat accumulator, and
- Fig. 5: shows schematically another embodiment of an assembly according to the invention.

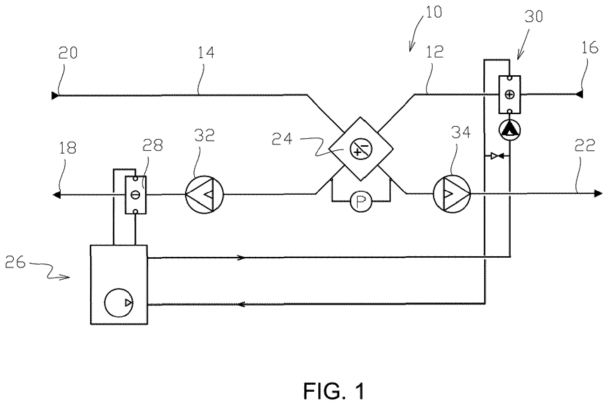

Fig. 1 shows schematically a simplified embodiment of an air handling assembly 10 according to the invention, in which are shown only the most essential elements of an air handling assembly according to the invention, by means of which the desired technical effect is achieved in the simplest way. Functional features in the following relate to a situation when the assembly 10 is in use. The figure shows an air handling assembly 10 comprising a first air duct 12 for exhaust air to be cooled. Such a duct can also be called an exhaust air duct. Under conditions, in which an effect according to the invention is to be achieved, humid air flows in the first air duct and, in this case, it is a question of the exhaust air of a space to be air conditioned; completely or very dry air naturally does not have a significant risk of freezing. The first air duct comprises an air inlet opening 16, through which exhaust air to be cooled is arranged to flow into the first air duct, and an air outlet opening 18, through which air to be cooled is arranged to flow away from the first air duct once air handling has occurred. The air handling assembly 10 further comprises a second air duct 14 for supply air to be heated. Such a duct can also be called a supply air duct. The air to be cooled is exhaust air and the air to be heated is supply air. Similarly, the second air duct 14 comprises an air inlet opening 20, through which air to be heated is arranged to flow into the second air duct 14 for air handling, and an air outlet opening 22, through which air to be heated is arranged to flow away from the second air duct 14 once air handling has occurred.

The air handling assembly 10 further comprises a heat recovery system 24 fitted in connection with first 12 and second air ducts 14, in the area between their inlet openings 16, 20 and outlet openings 18, 22, arranged to transfer heat between the air flow to be heated and the air flow to be cooled flowing in the air ducts. In practice, the heat recovery system may be implemented in various ways using a heat exchanger or exchangers. According to a preferred embodiment of the invention, the heat recovery system 24 is a so-called plate heat exchanger, which is formed from adjacent parallel plates arranged at a distance from each other, which form flow routes for the air flow to be heated and the air flow to be cooled, of which every other one is for air flow to be heated and every other one is for air flow to be cooled.

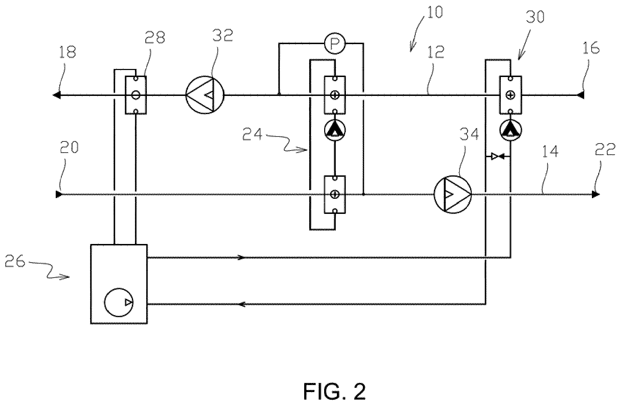

According to another preferred embodiment of the invention, the heat recovery system 24 is a so-called regenerative rotating heat exchanger (not shown in the figure). The heat recovery system may be implemented also by an indirect heat recovery system, in which the first air duct 12 and the second air duct 14 have separate heat exchangers, wherein the heat exchangers are connected to each other by a separate heat transfer medium circuit, which is shown in Fig. 2. In this manner, the first 12 and second air duct 14 of the assembly 10 can be positioned at a distance from each other, wherein these are in a heat transfer connection with each other by the heat recovery system 24.

The air handling assembly 10 comprises as its constituent part a heat pump assembly 26, which is arranged to transfer heat from the air flowing in the first air duct 12 such that it receives heat from the air at a point, or location, which is, in the direction of air flow, downstream of the heat recovery system 24, and releases heat into the air at a point, which is, in the direction of air flow, upstream of the heat recovery system 24. The heat pump assembly 26 is arranged into a heat transfer connection with the first air duct 12 (or the air flowing there when the assembly in is use) at two different points in the air duct, wherein the heat recovery system 24 is connected between these points. The heat pump assembly 26 comprises a first heat exchanger unit 28 arranged to cool the air flowing in the first air duct 12 and fitted in connection with the first air duct, in the direction of air flow, downstream of the heat recovery system 24. The heat pump assembly 26 further comprises a second heat exchanger unit 30 arranged to heat the air flowing in the first air duct 12 and fitted in connection with the first air duct, in the direction of air flow, upstream of the heat recovery system 24. Using the heat pump assembly 26, heat is thus transferred from the lower temperature exhaust air flowing in the first air duct 12 into the higher temperature exhaust air. Thus, it is achieved that the temperature of the air coming through the first air duct into the heat recovery system can be raised adequately high, which temperature is defined on a case-by-case basis, wherein the risk of freezing in the heat recovery system 24 can be minimized. This can be achieved without disturbing the air flow through the second air duct 14, wherein the pressure conditions of the space to be air conditioned remain also unchanged as a result of the freeze protection of the heat recovery system. The heat pump assembly 26 can be arranged into a heat transfer connection with the air flowing in the first air duct 12 by technically different kind of arrangements, which may be known as such.. The heat pump assembly 26 comprises a heat pump, the main components of which are known to be an evaporator, a compressor, a condenser and an expansion valve/throttle, by means of which heat can be transferred from a lower temperature to a higher temperature by a working medium suitable for the purpose. The heat pump evaporator and the condenser, one or both, can be directly or indirectly connected to the first air duct of the air handling assembly 10. Figs. 1 and 2 thus present the basic idea according to one embodiment of the invention. Both the first and the second air ducts are equipped with suitable blowers 32, 34 to create air flow. Both blowers are arranged, in the direction of air flow, downstream of the heat recovery system 24.

As an example of the operation of an air handling assembly, the following is presented. When the temperature of the supply air (the air flowing in the second air duct 14) falls below a case-specific first limit temperature, which may be, for example, +2°C, the water vapour contained in the exhaust air may condense onto the cold surfaces of the heat recovery system 24. If the temperature of the supply air continues to fall below a case-specific second limit temperature, which may be, for example, 0°C, condensed water begins to freeze in the heat recovery system 24. The formation of ice is to be detected or to be defined, for example, by a temperature measurement or as change in the pressure differential in the first air duct 12 between its blower and heat recovery system 24. Freezing can be prevented or at least minimized such that heat is transferred from the exhaust air (directly or indirectly) into the working medium of the heat pump assembly, in the direction of exhaust air flow, downstream of the heat recovery system 24, and, thus, heat removed from the air is brought back into the exhaust air upstream of the heat recovery system 24. Due to this affect, the temperature of the exhaust air in the heat exchanger system rises and ice formation ceases.

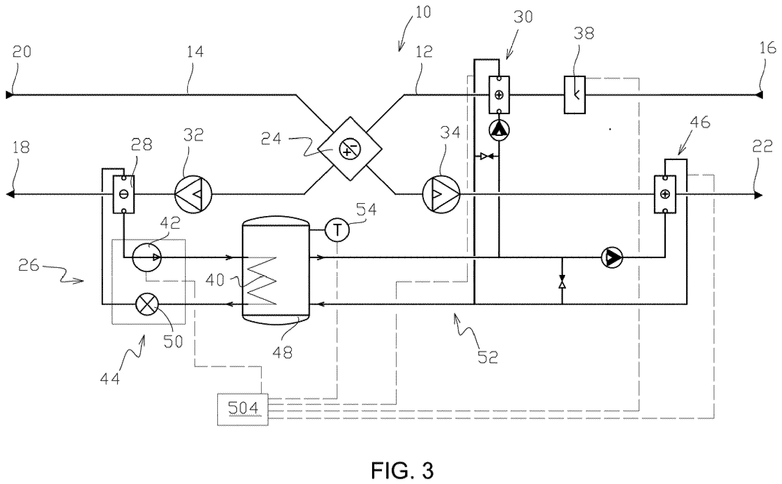

Fig. 3 shows an air handling assembly 10 according to a preferred embodiment of the invention, in which the utilization of a heat pump assembly 26 is taken further than in the embodiment of Figs. 1 and 2. The air handling assembly 10 shown in Fig. 3 comprises equivalent components to the embodiment shown in Fig. 1, as well as some features further improving the operation of the air handling assembly. Similarly, the air handling assembly 10 shown in Fig. 3 comprises a first air duct 12 for exhaust air to be cooled and a second air duct 14 for supply air to be heated. The first air duct comprises an air inlet opening 16, through which air to be cooled is arranged to flow into the first air duct. Typically, outdoor air is taken through the inlet opening into the assembly. The first air duct 12 also comprises an air outlet opening 22, through which air to be cooled is arranged to flow away from the first air duct once air handling has occurred. The air outlet opening can be connected, for example, to a separate supply air duct system of a building (not shown), through which the supply air is led into the spaces to be air conditioned. In the embodiment of Fig. 3, the first air duct 12 comprises, in the direction of air flow when the assembly is in operation, an air humidifier device 38 fitted downstream of the air inlet opening 16, a second heat exchanger unit 30 of the heat pump assembly 24, a heat recovery system 24, an exhaust air blower 32 and a first heat exchanger unit 28 of the heat pump assembly 26. The second air duct 14 comprises, in the direction of air flow when the assembly is in operation, a heat recovery system 24 fitted downstream of the air inlet opening 20, a supply air blower 34 and a third heat exchanger unit 46 of the heat pump assembly 24.

The heat pump assembly 26 comprises a first heat exchanger unit 28 in the first air duct 12 downstream of the heat recovery system 24 and a second heat exchanger unit 30 in the first air duct upstream of the heat recovery system 24, as has been presented above regarding Fig. 1. The heat pump assembly 26 further comprises a third heat exchanger unit 46 arranged to heat the air flowing in the second air duct 14 and fitted in connection with the second air duct, in the direction of air flow, downstream of the heat recovery system 24. In the embodiment of Fig. 3, the heat pump assembly 26 comprises a heat pump 44. The heat pump comprises an evaporator, which, in this embodiment, is the first heat exchanger unit 28 of the heat pump assembly 26, wherein heat is transferred from the exhaust air directly into the working medium of the heat pump 44 by vapourizing and optionally also by superheating the vapourized working medium. In order to raise the pressure of the working medium to a higher level than the evaporation pressure, the heat pump 44 is equipped with a compressor 42. The heat pump condenser 40 is fitted to the heat accumulator 48 included in the heat pump assembly. The heat pump further comprises an expansion valve 50, in which the working medium expands to a lower pressure. The operating principle of the heat pump is known per se to a person skilled in the art, and is therefore not described here in greater detail. The heat pump 44 evaporator 28 is fitted in the air handling assembly 10 into the first air duct 12, in the direction of air flow, downstream of the heat recovery system 24, and heat is transferred by the heat pump 44 from the exhaust air flowing in the first air duct into the heat accumulator, into the higher temperature. The heat accumulator preferably comprises a thermally insulated container containing water-based heat transfer medium, such a water-antifreeze mixture. This may be, for example, a water-glycol mixture. Because the heat accumulator is preferably based on the use of water and its heat conductivity, it can, in the following, also be called a hot water accumulator 48. The hot water accumulator 48 is connected to a flow connection with both the second heat exchanger unit 30 and the third heat exchanger unit 46. Of these, the second heat exchanger unit 30 is arranged to heat the air flowing in the first air duct 12, in its flow direction, upstream of the heat recovery system 24. The power of the second heat exchanger unit 30 can preferably be adjusted by adjusting the temperature of the heat transfer medium entering the heat exchanger unit.

The third heat exchanger unit 46 is, in turn, fitted in connection with the second air duct 14 arranged to heat the air (supply air) flowing in the second air duct 14, in its flow direction, downstream of the heat recovery system 24. In this manner, using the third heat exchanger unit 46, the temperature of the supply air can, if needed, be raised above the level, to which the heat recovery system 24 has first been capable of raising it. Thus, the third heat exchanger unit can also be called a post-heating heat exchanger. The second heat exchanger unit 30 and the third heat exchanger unit 46 are connected by the duct system 52 to the hot water accumulator 48 such that their heat output efficiency into the air is to be independently controlled by the stored heat of the hot water accumulator 48. In Fig. 3, this is implemented such that the second heat exchanger unit 30 and the third heat exchanger unit 46 are connected in parallel to the duct system 52.

In the following, the operation of an air handling assembly according to the invention and the method to be implemented using it are described in greater detail.

When the air handling assembly is in operation, air flows through its first 12 and second air ducts 14, wherein the air (exhaust air) flowing in the first air duct 12 is cooled and the air (supply air) flowing in the second air duct 14 is heated by the heat recovery system 24. In the heat recovery system, heat is transferred from the exhaust air into the supply air. In an embodiment according to Fig. 3, the temperature of the heat accumulator 48 is maintained at a desired level such that heat is brought into the accumulator from the air flowing through the first air duct 12. This is performed by a heat pump 44. In the method, the temperature of the heat accumulator 48 is preferably maintained at a temperature of 40 - 50°C. The temperature level is maintained just adequately high in order that the desired operation of the second and third heat exchanger units is possible; as is known, too high a temperature will weaken the coefficient of performance of the heat pump.

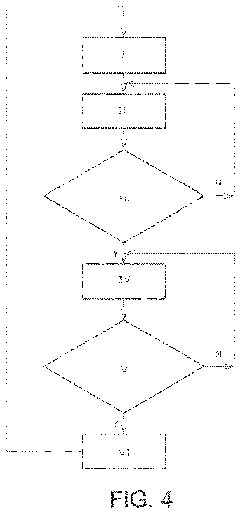

A method for controlling the temperature of a heat accumulator 48, which forms a sub-process of a whole entity according to the invention, is illustrated as a flow chart in Fig. 4. In the method, for the temperature of the heat accumulator is defined a lower limit and an upper limit in handling step I. The heat accumulator 48 is equipped with at least one temperature transmitter and, in handling step II, the temperature of the accumulator is measured by the temperature transmitter 54. Next, the method includes decision making step III, in which the temperature measured from the heat accumulator and the defined lower limit of the temperature of the heat accumulator are compared, in particular whether the measured temperature is lower than the lower limit of the temperature. If the measured temperature is not lower than the lower limit of the temperature, the method returns to handling step II. If the measured temperature is lower than the lower limit of the temperature, the method moves on to handling step IV, in which the heat pump 44, in particular its compressor 42, is started or, if it is running, its running state is maintained. When the heat pump 44 is running, heat is transferred from the exhaust air into the hot water accumulator 48. Next, the method includes decision making step V, in which the temperature measured from the heat accumulator and the defined upper limit of the temperature of the heat accumulator are compared, in particular whether the measured temperature is greater than or equal to the upper limit of the temperature. If the measured temperature is not greater than or equal to the upper limit of the temperature, the method returns to handling step IV. If the measured temperature is greater than or equal to the upper limit of the temperature, the method moves on to handling step VI, in which the heat pump 44, in particular its compressor 42, is stopped. Thereafter, the method moves back to handling step I.

The operation of the heat pump 44 is thus controlled on the basis of the temperature measured from the heat accumulator. The heat pump can be controlled either by on/off control, or the drive motor of the heat pump can be rotation speed-controlled, wherein its power is substantially steplessly adjustable, and thus it can even be running constantly. The heat obtained in this manner from the exhaust air is to be used via the accumulator 48 in the second 30 and third heat exchanger units 46.

In a case where the freezing risk of the heat recovery system 24 is elevated or ice formation has begun, the operation of the second heat exchanger unit 30 of the heat pump assembly 26 is activated. This is the case, for example, when the temperature of the air coming through the second air duct 14 into the heat recovery system 24 is greater than 0°C. The second heat exchanger unit can be kept passive in cases where there is no risk of freezing.

In a case where the freezing risk of the heat recovery system 24 is elevated or ice formation has begun, the second heat exchanger unit 30 of the heat pump assembly 26 is controlled to transfer heat into the air flowing in the first air duct 12, wherein through the heat exchanger unit occurs heat transfer into the air and the air temperature rises. Because said second heat exchanger unit is, in the direction of air flow, upstream of the heat recovery system 24, air enters the heat recovery system at a relatively high temperature, and, in this manner, the temperature of the air coming out from the heat recovery system 24 is also higher, and, similarly, the temperature of the heat transfer surfaces of the heat recovery system 24 is higher than in a case where the heat would not be transferred from the second heat exchanger unit 30 into the air. In this manner, the temperature level of the heat recovery system 24 can be changed by adjusting the power of the second heat exchanger unit 30 such that the risk of freezing is minimized or removed.

The heating power of the third heat exchanger unit 46 is adjusted such that the air temperature in the outlet opening 22 is at the desired level. The third heat exchanger unit 46 is arranged to transfer heat from the hot water accumulator 48 into the supply air upstream of the outlet opening 22. The heat available from the hot water accumulator is used primarily in the third heat exchanger unit 46 for heating air, and in a case that freezing has been detected in the heat recovery system, a portion of the heat available from the hot water accumulator is guided to be used in the second heat exchanger unit 30 for heating air. In this manner, the heat recovered from the exhaust air is to be used both for post-heating the supply air (third heat exchanger unit 46) and for protecting the heat recovery system from freezing (second heat exchanger unit 30).

The embodiment of Fig. 3 shows how, according to one embodiment of the invention, there is an air humidifier 38 in the first air duct 12, in the direction of air flow, upstream of the second heat exchanger unit 30. According to an embodiment of the invention, its purpose is to bring added moisture into the exhaust air before the air is led into the second heat exchanger unit 30. The humidifier 38 is preferably configured to bring liquid water into the air, wherein the heat of evaporation of the water is brought into the process by the second heat exchanger unit 30. When the humidifier is in operation, the heat transferred by the second heat exchanger unit is stored both into the air and into water vapour contained in the air. A portion of the heat is also used for vapourizing the water. In the heat recovery system 24, water vapour once again condenses, the heat released from which condensing, protects the heat recovery system 24 from freezing and which heat is also transferred through the heat recovery system 24 into the supply air flowing in the second air duct 14.

When a given energy is transferred into moist air in this manner, only a portion of the energy is used for raising the temperature of the air, and a portion binds as latent heat into the water vapour. The heat transferring to the heat recovery system 24 is transferrable at a lower temperature in comparison to dry air. This decreases the heat losses of the assembly. At the same time, the water condensing onto the surfaces of the heat recovery system 24 also functions as a means of cleaning the surfaces.

An air handling assembly according to the invention involves a control unit 504. The control unit comprises a computer or other memory device comprising commands, which as executed by a computer cause the computer to implement a method according to the invention for controlling the temperature of the heat accumulator 48.

The computer or other memory device preferably comprises also commands, which as executed by a computer cause the computer to implement a method according to the invention for preventing the freezing of a heat recovery system.

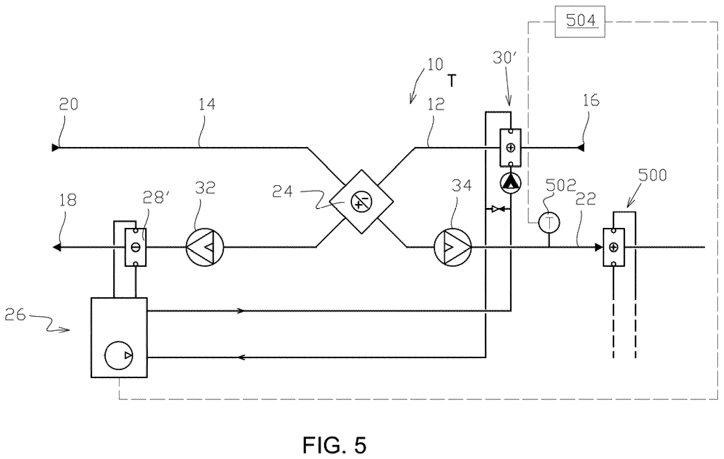

Fig. 5 shows an embodiment according to the invention. Herein is preferably described a method for upgrading an existing air handling assembly. In this case, the existing air handling assembly 10 comprises a first air duct 12 for air to be cooled. Under conditions, in which an effect according to the invention is to be achieved, in the first air duct flows moist air and, in this case, it is usually a question of the exhaust air of a space to be air conditioned; completely or very dry air naturally does not have a significant risk of freezing. The first air duct 12 comprises an air inlet opening 16, through which air to be cooled is arranged to flow into the first air duct, and an air outlet opening 18, through which air to be cooled is arranged to flow away from the first air duct once air handling has occurred. The air handling assembly 10 further comprises a second air duct 14 for air to be heated. Such a duct can also be called a supply air duct. Usually, in a case where the effect of the invention is achieved, the air to be cooled is the exhaust air of a building, and the air to be heated is the supply air of the building. Similarly, the second air duct 14 comprises an air inlet opening 20, through which air to be heated is arranged to flow into the second air duct 14 for air handling, and an air outlet opening 22, through which air to be heated is arranged to flow further from the second air duct 14 once air handling has occurred.

The existing air handling assembly 10 further comprises a heat recovery system 24 fitted in connection with the first 12 and second air ducts 14, in the area between their inlet openings 16, 20 and outlet openings 18, 22, arranged to transfer heat between the air flow to be heated and the air flow to be cooled flowing in the air ducts. In practice, an existing heat recovery system may be implemented using any suitable heat exchanger or exchangers. The existing assembly comprises, in connection with both the first and the second air ducts, a blower 32, 34 to create air flow. Further, the existing air handling assembly 10 comprises, in connection with the second air duct 14, an air post-heating device 500, which may be connected, for example, as a part of the circulating fluid heating system of a building using, for example, district heating or the building's own heat production facility as a heat source.

The existing air handling assembly is upgraded by adapting a method, in which a heat pump assembly 26 is installed into an air handling assembly as follows. Into the first air duct 12 is installed a heat pump assembly evaporator 28' downstream of the heat recovery system 24 in the direction of air flow, which is predominant when the assembly is running in a normal manner. In use, the so-called working medium is evaporated in the heat pump assembly 26 evaporator and possibly also superheated, wherein heat from the exhaust air transfers into the working medium. A method for upgrading an air handling assembly further includes the installation of a heat pump assembly 26 condenser 30' in connection with the first air duct 12 upstream of the heat recovery system 24 in the direction of air flow, which is predominant when the assembly is running.

After the upgrading, freezing of the heat recovery system 24 of the existing air handling assembly can be avoided and, at the same time, the efficiency of the air handling assembly may be improved by the heat pump assembly.

Preferably, in the upgrading, a temperature transmitter or thermometer 502 is installed in connection with the second air duct 14, in the direction of air flow, upstream of the post-heating device 500, to measure the temperature of the air flowing in the air duct, and the heat pump is configured to maintain the temperature of the air flowing in the second air duct upstream of the post-heating device 500 in the pre-defined range, which is preferably 4 - 18 degrees Celsius.

The configuration of the heat pump comprises that, in a method according to the invention, into the air handling assembly is preferably installed a control unit 504 of the heat pump assembly. The control unit comprises a computer or other memory device comprising commands, which as executed by a computer cause the computer to control the operation of the heat pump such that it maintains the temperature of the air flowing in the second air duct upstream of the post-heating device 500 in the pre-defined range.

If the heat recovery system is multistep, the second heat exchanger unit 30 is arranged, at the latest, upstream of the last heat recovery system step in the direction of the air flowing in the first air duct.

It should be noted that above are described only some preferred embodiments of the invention. It is thus obvious that the invention is not limited only to the embodiments described above, rather it may be implemented in various ways within the scope defined by the accompanying claims.

## Claims

1. An air handling assembly (10) comprising a first air duct (12) for exhaust air to be cooled comprising an air inlet opening (16) and an air outlet opening (18), a second air duct (14) for supply air to be heated comprising an air inlet opening (20) and an air outlet opening (22), as well as a heat recovery system (24) fitted in connection with the first (12) and second air ducts (14), in the area between their inlet openings and outlet openings, arranged to transfer heat between the air flow to be heated and the air flow to be cooled flowing in the air ducts (12, 14), as well as a heat pump assembly (26), wherein the heat pump assembly (26) comprises a first heat exchanger unit (28) arranged to cool the air flowing in the first air duct (12) for exhaust air, and that the first heat exchanger unit (28) is fitted in connection with the first air duct at a location downstream of the heat recovery system (24), in the direction of air flow, and that the heat pump assembly (26) comprises a second heat exchanger unit (30), **characterized in that** the second heat exchanger unit (30) is arranged to heat the air flowing in the first air duct (12) for exhaust air, and **in that** the second heat exchanger unit (30) is fitted in connection with the first air duct (12) at a location upstream of the heat recovery system (24), in the direction of air flow.

2. An air handling assembly (10) according to claim 1, **characterized in that** the heat pump assembly (26) comprises a heat pump (44), and that the heat pump assembly (26) comprises a heat accumulator (48), which is arranged to be heated by the heat pump and that the heat accumulator (48) is connected to a heat transfer connection with the second heat exchanger unit (30).

3. An air handling assembly (10) according to claim 1, **characterized in that** the heat pump assembly (26) comprises a heat pump (44), and that the first heat exchanger unit (28) of the heat pump assembly is a heat pump evaporator and that the second heat exchanger unit (30) is a heat pump assembly condenser.

4. An air handling assembly (10) according to claim 2, **characterized in that** the heat pump assembly (26) comprises a third heat exchanger unit (46) arranged in connection with the second air duct, in the direction of air flow, downstream of the heat recovery system, which is connected to a heat transfer connection with the heat accumulator (48).

5. An air handling assembly (10) according to claim 4, **characterized in that** the second heat exchanger unit (30) and the third heat exchanger unit (46) are connected by a duct system to the heat accumulator (48) such that they are connected in parallel in relation to each other.

6. Method of upgrading an air handling assembly, the existing air handling assembly (10) comprising a first air duct (12) for exhaust air to be cooled comprising an air inlet opening (16) and an air outlet opening (18), a second air duct (14) for supply air to be heated comprising an air inlet opening (20) and an air outlet opening (22), as well as a heat recovery system (24) fitted in connection with the first and second air ducts, in the area between their inlet openings and outlet openings, arranged to transfer heat between the air flow to be heated and the air flow to be cooled flowing in the air ducts, and the existing air handling assembly (10) further comprising, in connection with the second air duct (14), a post-heating device (500), wherein in the method, into the existing air handling assembly (10) is installed a heat pump assembly (26) such that into the first air duct (12) of the air handling assembly for exhaust air is installed a heat pump assembly evaporator (28'), at a location downstream of the heat recovery system (24) in the direction of air flow when in use, **characterized in that** into the first air duct of the air handling assembly for exhaust air is installed a heat pump assembly (26) condenser, at a location upstream of the heat recovery system (24) in the direction of air flow.

7. A method of upgrading an air handling assembly according to claim 6, **characterized in that**, in the upgrading, a temperature transmitter or thermometer (502) is installed in connection with the second air duct (14), in the direction of air flow, upstream of the post-heating device (500), to measure the temperature of the air flowing in the air duct, and that the heat pump assembly (26) is configured to maintain the temperature of the air flowing in the second air duct upstream of the post-heating device (500) in the pre-defined range.

## Patentansprüche

1. Lüftungsanordnung (10), umfassend einen ersten Luftkanal (12) für zu kühlende Abluft, der eine Lufteinlassöffnung (16) und eine Luftauslassöffnung (18) umfasst, einen zweiten Luftkanal (14) für zu erwärmende Zuluft, der eine Lufteinlassöffnung (20) und eine Luftauslassöffnung (22) umfasst, sowie ein Wärmerückgewinnungssystem (24), das in Verbindung mit dem ersten (12) und dem zweiten Luftkanal (14) in dem Bereich zwischen den Einlassöffnungen und den Auslassöffnungen montiert ist, das angeordnet ist, um Wärme zwischen dem zu erwärmenden Luftstrom und dem zu kühlenden Luftstrom zu übertragen, die in den Luftkanälen (12, 14) strömen, sowie eine Wärmepumpanordnung (26), wobei
die Wärmepumpanordnung (26) eine erste Wärmetauschereinheit (28) umfasst, die angeordnet ist, um die Luft zu kühlen, die in dem ersten Luftkanal (12) für Abluft strömt, und die erste Wärmetauschereinheit (28) in Verbindung mit dem ersten Luftkanal an einer Stelle stromabwärts von dem Wärmerückgewinnungssystem (24) in der Richtung des Luftstroms montiert ist und die Wärmepumpanordnung (26) eine zweite Wärmetauschereinheit (30) umfasst,
**dadurch gekennzeichnet, dass** die zweite Wärmetauschereinheit (30) angeordnet ist, um die Luft zu erwärmen, die in dem ersten Luftkanal (12) für Abluft strömt, und darin,
dass die zweite Wärmetauschereinheit (30) in Verbindung mit dem ersten Luftkanal (12) an einer Stelle stromaufwärts von dem Wärmerückgewinnungssystem (24) in der Richtung des Luftstroms montiert ist.

2. Lüftungsanordnung (10) nach Anspruch 1, **dadurch gekennzeichnet, dass** die Wärmepumpanordnung (26) eine Wärmepumpe (44) umfasst und dass die Wärmepumpanordnung (26) einen Wärmespeicher (48) umfasst, der angeordnet ist, um durch die Wärmepumpe erwärmt zu werden, und dass der Wärmespeicher (48) mit einer Wärmeübertragungsverbindung mit der zweiten Wärmetauschereinheit (30) verbunden ist.

3. Lüftungsanordnung (10) nach Anspruch 1, **dadurch gekennzeichnet, dass** die Wärmepumpanordnung (26) eine Wärmepumpe (44) umfasst und dass die erste Wärmetauschereinheit (28) der Wärmepumpanordnung ein Wärmepumpverdampfer ist und dass die zweite Wärmetauschereinheit (30) ein Wärmepumpanordnungskondensator ist.

4. Lüftungsanordnung (10) nach Anspruch 2, **dadurch gekennzeichnet, dass** die Wärmepumpanordnung (26) eine dritte Wärmetauschereinheit (46) umfasst, die in Verbindung mit dem zweiten Luftkanal in der Richtung des Luftstroms stromabwärts von dem Wärmerückgewinnungssystem angeordnet ist, die mit einer Wärmeübertragungsverbindung mit dem Wärmespeicher (48) verbunden ist.

5. Lüftungsanordnung (10) nach Anspruch 4, **dadurch gekennzeichnet, dass** die zweite Wärmetauschereinheit (30) und die dritte Wärmetauschereinheit (46) durch ein Kanalsystem mit dem Wärmespeicher (48) verbunden sind, sodass sie zueinander parallel verbunden sind.

6. Verfahren zum Aufrüsten einer Lüftungsanordnung, wobei die existierende Lüftungsanordnung (10) einen ersten Luftkanal (12) für zu kühlende Abluft, der eine Lufteinlassöffnung (16) und eine Luftauslassöffnung (18) umfasst, einen zweiten Luftkanal (14) für zu erwärmende Zuluft, der eine Lufteinlassöffnung (20) und eine Luftauslassöffnung (22) umfasst, sowie ein Wärmerückgewinnungssystem (24) umfasst, das in Verbindung mit dem ersten und dem zweiten Luftkanal in dem Bereich zwischen den Einlassöffnungen und den Auslassöffnungen montiert ist, das angeordnet ist, um Wärme zwischen dem zu erwärmenden Luftstrom und dem zu kühlenden Luftstrom zu übertragen, die in den Luftkanälen strömen, und wobei die existierende Lüftungsanordnung (10) ferner in Verbindung mit dem zweiten Luftkanal (14) eine Nacherwärmungsvorrichtung (500) umfasst, wobei
in dem Verfahren in die existierende Lüftungsanordnung (10) eine Wärmepumpanordnung (26) installiert wird, sodass in den ersten Luftkanal (12) der Lüftungsanordnung für Abluft ein Wärmepumpanordnungsverdampfer (28') an einer Stelle stromabwärts von dem Wärmerückgewinnungssystem (24) in der Richtung des Luftstroms im Gebrauch installiert wird,
**dadurch gekennzeichnet, dass** in den ersten Luftkanal der Lüftungsanordnung für Abluft ein Kondensator einer Wärmepumpanordnung (26) an einer Stelle stromaufwärts von dem Wärmerückgewinnungssystem (24) in der Richtung des Luftstroms installiert wird.

7. Verfahren zum Aufrüsten einer Lüftungsanordnung nach Anspruch 6, **dadurch gekennzeichnet, dass** bei dem Aufrüsten ein Temperaturmessumformer oder ein Thermometer (502) in Verbindung mit dem zweiten Luftkanal (14) in der Richtung des Luftstroms stromaufwärts von der Nacherwärmungsvorrichtung (500) installiert wird, um die Temperatur der Luft zu messen, die in dem Luftkanal strömt, und dass die Wärmepumpanordnung (26) eingerichtet ist, um die Temperatur der Luft, die in dem zweiten Luftkanal strömt, stromaufwärts von der Nacherwärmungsvorrichtung (500) in dem vordefinierten Bereich zu halten.

## Revendications

1. Ensemble de traitement de l'air (10) comprenant une première conduite d'air (12) pour l'air d'échappement à refroidir, comprenant une ouverture d'entrée d'air (16) et une ouverture de sortie d'air (18), une seconde conduite d'air (14) pour l'air d'alimentation à chauffer, comprenant une ouverture d'entrée d'air (20) et une ouverture de sortie d'air (22), de même qu'un système de récupération de chaleur (24) ajusté en connexion avec les première (12) et seconde (14) conduites d'air dans la zone entre leurs ouvertures d'entrée et leurs ouvertures de sortie, conçu pour transférer de la chaleur entre le flux d'air à chauffer et le flux d'air à refroidir s'écoulant dans les conduites d'air (12, 14), de même qu'un ensemble de pompe à chaleur (26),
l'ensemble de pompe à chaleur (26) comprenant une première unité d'échange de chaleur (28) conçue pour refroidir l'air s'écoulant dans la première conduite d'air (12) pour l'air d'échappement, et la première unité d'échange de chaleur (28) étant ajustée en connexion avec la première conduite d'air à un emplacement en aval du système de récupération de chaleur (24) dans le sens de l'écoulement d'air et l'ensemble de pompe à chaleur (26) comprenant une deuxième unité d'échange de chaleur (30),
**caractérisé en ce que** la deuxième unité d'échange de chaleur (30) est conçue pour chauffer l'air s'écoulant dans la première conduite d'air (12) pour l'air d'échappement, et
**en ce que** la deuxième unité d'échange de chaleur (30) est ajustée en connexion avec la première conduite d'air (12) à un emplacement en aval du système de récupération de chaleur (24) dans le sens de l'écoulement d'air.

2. Ensemble de traitement d'air (10) selon la revendication 1, **caractérisé en ce que** l'ensemble de pompe à chaleur (26) comprend une pompe à chaleur (44), et que l'ensemble de pompe à chaleur (26) comprend un accumulateur de chaleur (48), qui est conçu pour être chauffé par la pompe à chaleur et que l'accumulateur de chaleur (48) est connecté à une connexion de transfert de chaleur avec la deuxième unité d'échange de chaleur (30) .

3. Ensemble de traitement d'air (10) selon la revendication 1, **caractérisé en ce que** l'ensemble de pompe à chaleur (26) comprend une pompe à chaleur (44), et que la première unité d'échange de chaleur (28) de l'ensemble de pompe à chaleur est un évaporateur de pompe à chaleur et que la deuxième unité d'échange de chaleur (30) est un condenseur d'ensemble de pompe à chaleur.

4. Ensemble de traitement d'air (10) selon la revendication 2, **caractérisé en ce que** l'ensemble de pompe à chaleur (26) comprend une troisième unité d'échange de chaleur (46) disposée en connexion avec la seconde conduite d'air dans le sens de l'écoulement d'air en aval du système de récupération de chaleur, qui est connectée à une connexion de transfert de chaleur avec l'accumulateur de chaleur (48).

5. Ensemble de traitement d'air (10) selon la revendication 4, **caractérisé en ce que** la deuxième unité d'échange de chaleur (30) et la troisième unité d'échange de chaleur (46) sont connectées par un système de conduites à l'accumulateur de chaleur (48), de sorte qu'elles sont connectées en parallèle l'une par rapport à l'autre.

6. Procédé de mise à niveau d'un ensemble de traitement d'air existant, l'ensemble de traitement d'air existant (10) comprenant une première conduite d'air (12) pour l'air d'échappement à refroidir, comprenant une ouverture d'entrée d'air (16) et une ouverture de sortie d'air (18), une seconde conduite d'air (14) pour l'air d'alimentation à chauffer, comprenant une ouverture d'entrée d'air (20) et une ouverture de sortie d'air (22), de même qu'un système de récupération de chaleur (24) ajusté en connexion avec les première et seconde sorties d'air dans la zone entre leurs ouvertures d'entrée et leurs ouvertures de sortie, conçu pour transférer de la chaleur entre le flux d'air à chauffer et le flux d'air à refroidir s'écoulant dans les conduites d'air, et l'ensemble de traitement d'air existant (10) comprenant en outre, en connexion avec la seconde conduite d'air (14), un dispositif de post-chauffage (500), sachant que,
dans le procédé, dans l'ensemble de traitement d'air existant (10), est installé un ensemble de pompe à chaleur (26) tel que, dans la première conduite d'air (12) de l'ensemble de traitement de chaleur pour l'air d'échappement, est installé un évaporateur d'ensemble de pompe à chaleur (28'), à un emplacement en aval du système de récupération de chaleur (24) dans le sens de l'écoulement d'air en cours d'utilisation,
**caractérisé en ce que**, dans la première conduite d'air de l'ensemble de traitement d'air pour l'air d'échappement, est installé un condenseur de pompe à chaleur (26) à un emplacement en amont du système de récupération de chaleur (24) dans le sens du flux d'air.

7. Procédé de mise à niveau d'un ensemble de traitement d'air selon la revendication 6, **caractérisé en ce que**, dans la mise à niveau, un transmetteur de température ou thermomètre (502) est installé en connexion avec la seconde conduite d'air (14) dans le sens de l'écoulement d'air en amont du dispositif de post-chauffage (500), pour mesurer la température de l'air s'écoulant dans la conduite d'air, et que l'ensemble de pompe à chaleur (26) est conçu pour maintenir la température de l'air s'écoulant dans la deuxième conduite d'air en amont du dispositif de post-chauffage (500) dans la plage prédéfinie.
